# EUROPEAN PATENT APPLICATION

(11) **EP 3 158 864 A1**
(43) Date of publication of application: **26.04.2017**
(21) Application number: 15190488.5
(22) Date of filing: 20.10.2015
(51) Int. Cl.: A01N 25/00

(54) **METHOD FOR COATING SEED**

(71) Applicant: Incotec Holding B.V., 1601 BL Enkhuizen (NL)
(72) Inventor: The designation of the inventor has not yet been filed
(74) Representative: V.O.

(57) **Abstract**

The invention is directed to a method for preparing coated seed, to a coated seed obtainable by said method, and to the use of a wax in a seed coating composition.

The method for preparing coated seed comprises
- applying a seed coating composition to seed; and,
- directly thereafter contacting said coated seed with a powder formulation, wherein said powder formulation comprises a wax,
wherein said coating composition comprises 0.5-50 % by weight of the coating composition of a component that provides tackiness such that the resulting coated seed is more tacky than a coated seed obtained with the same coating composition lacking the component that provides tackiness.

## Description

The invention is directed to a method for preparing coated seed, to a coated seed obtainable by said method, and to the use of a wax in a seed coating composition.

Plant seed is often coated before sowing, for example, to protect seeds from damage during handling and/or to improve handling properties. Seeds are often coated to provide useful substances (active ingredients) to the seed and the seedlings upon germination, for example, plant nutrients, growth stimulating agents, and plant protective products. An important advantage of providing active ingredients in a seed coating is that it allows for a precise and controlled release and dose per seedling. Typical seed coating methods include film coating, pelleting and encrusting of seed.

The seed coating can contain many ingredients, and each of these ingredients have their advantages and disadvantages. One of the disadvantages that may occur when applying active ingredients in a coating composition is that the resulting coated seed becomes tacky. Such a tacky surface of the coated seeds can lead to severe detrimental effects on the speed of possible further processing of the coated seeds, such as bagging and sowing. If the seeds are tacky and have the tendency to stick to each other, then further processing of the coated seeds is severely slowed down and may become complex. By decreasing the processing speed and increasing the time required for carrying out the necessary process steps, the overall costs are increased, which of course is undesirable.

The addition of conventionally drying agents to seed coating compositions have been proposed in the art.

Examples of conventional drying agents that have been disclosed in the art are talc, diatomaceous earth and mineral earths, such as kaolin.

WO-A-2013/150261 teaches contacting the plant seeds with dry free flowing particles made up of at least one species of electret particle made up of a wax, wherein the electret particle adheres more firmly to the plant seeds than do particles that comprise a dry free flowing substance that is or includes a mineral earth component.

WO-A-2013/158284 describes a method of reducing dust comprising treating a seed with (a) one or more insecticidal pesticidal, fungicidal, or herbicidal treating agents; and (b) one or more organic lubricant compositions.

WO-A-2013/166012 discloses an aqueous seed treatment mixture comprising an agricultural active component, and a binder formulation, said binder formulation comprising: from about 5 % to about 50 % of a latex carrier by weight; and from about 1 % to about 40 % of a wax by weight; wherein said binder formulation is substantially free from added inorganic particulate materials; wherein said latex carrier comprises a styrene-acrylate based copolymer.

The prior art does not disclose process conditions that allow for speeding up subsequent processing of coated seed and accordingly lowering processing cost.

An object of the invention is to address this need in the art and overcome disadvantages of prior art methods.

The inventors found that this object can, at least in part, be met by a method wherein, directly after coating, the coated seeds are treated with a specific powder formulation.

Accordingly, in a first aspect the invention is directed to a method for preparing coated seed, said method comprising
- applying a seed coating composition to seed; and,
- directly thereafter contacting said coated seed with a powder formulation, wherein said powder formulation comprises a wax,
wherein said coating composition comprises 0.5-50 % by total weight of the coating composition of a component that provides tackiness such that the resulting coated seed is more tacky than a coated seed obtained with the same coating composition lacking the component that provides tackiness.

The process of the invention advantageously results in a coated seed that can be subjected to subsequent processes with reduced processing time. Further, it was found that the dust-off of active ingredients is relatively low. Additionally, it was found that the method of the invention yields coated seed that does not have free powder which statically sticks to the seed. The powder advantageously sticks to the outside of the coating and is fixed there. Furthermore, the invention allows a wide range of possible waxes to be used. It is also possible to mix the wax with other cheaper powders so as to find a good balance between price and effectivity.

The term "tacky" is a well know term in the art. As used in this application, the term "tacky" is meant to refer to the property of having a sticky nature or a sticky feel and/or having a wet nature or a wet feel. The property can be compared to paint being applied to a wood surface. In application of paint, several drying states can be identified. Directly after application, paint is wet. Upon drying, it subsequently becomes dust free, tack free and dry. The current application is mainly directed at seed coating systems that do not reach the tack free state or do not reach the tack free state fast enough. In the wet and sticky phase, the paint is not completely fixed and can smear, but the paint can also take up compounds, including undesirable compounds, and can give off, but the paint can also take up compounds. The same holds for coated seeds. The degree of tackiness can, for instance, be determined using a glove test or rub-off test. In this test seed is grabbed with a glove and the amount of colour transferred to the glove can then be quantified. It is also possible to determine the degree of tackiness using a caking test, wherein coated seed is pressed together in a cup after which it is examined how the seed exits the cup.

The term "seed" as used in this application is meant to refer in particular to the ripened ovule of gymnosperms and angiosperms, which contains an embryo surrounded by a protective cover. In particular, the term covers cereal kernels. The protective cover can comprise the seed coat (testa). Some seeds comprise a pericarp or fruit coat around the seed coat. In particular, when this layer is closely adhered to the seed, as in cereal kernels, it is in some cases referred to as a caryopsis or an achene. As used in this application, the term "seed coat" is meant to include a caryopsis or an achene. In practical terms, the term "seed" includes but is not restricted to anything that can be planted in agriculture to produce plants, including pelleted seeds, true seeds, plant seedlings, rootstock, and tubers or bulbs.

The term "coating" as used in this application, is meant to refer to applying material to a surface of a seed, for instance as a layer of a material around a seed. Coating includes film coating, pelleting, and encrusting. Pellets obtained with pelleting are also known as seed pills. The coating is preferably applied over substantially the entire surface of the seed, such as over 90 % or more of the surface area of the seed, to form a layer. However, the coating may be complete or partial, for instance over 20 % or more of the surface area of the seed, or 50 % or more.

The term "seed coating composition" as used in this application is meant to refer to a composition to be used for coating of seed, possibly after combination of the composition with other compositions, such as plant protective product formulations, diluents such as water, nutrients, and/or additives such as beneficial fungi or bacteria. Hence, the term includes both compositions that do and do not contain plant protective product formulations.

The term "plant enhancing agent" as used in this application is meant to refer to any component that is directly or indirectly advantageous for a plant or a plant seed, for instance through a biological effect on the plant, seed, or on organisms harmful for a plant such as fungi, pests and insects. Plant enhancing agents include plant protective products, safeners, growth promoters, growth regulators, and the like.

In accordance with the method of the invention, in one step a seed coating composition is applied to seed. The seed coating composition comprises 0.5-50 % by total weight of the coating composition of a component that provides tackiness. This means this component provides the resulting seed coating with a sticky nature or a sticky feel. In any case, the presence of the component that provides tackiness results in a coated seed that is more tacky than a seed coated with the same composition lacking this specific component. The person skilled in the art will be able to assess whether one coating is more tacky than the other using his technical skills and conventional test methods.

The seed is a plant seed, for example a seed of an agricultural crop, a vegetable seed, a herb seed, a wildflower seed, an ornamental seed, a grass seed, a tree seed, or a bush seed.

Preferably, the plant seed is of an agricultural crop. The seed may be of the order of *Monocotyledoneae* or of the order or *Dicotyledoneae.* Suitable seeds include seed of soybean, cotton, corn, peanut, maize, wheat, barley, oat, rye triticale, mustard, sunflower, sugar beet, safflower, millet, chicory, flax, rapeseed, buckwheat, tobacco, hemp seed, alfalfa, signal grass, clover, sorghum, chick pea, beans, peas, vetch, rice and linseed. Examples of suitable vegetable seeds include asparagus, chives, celery, leek, garlic, beetroot, spinach, beet, curly kale, cauliflower, sprouting broccoli, savoy cabbage, white cabbage, red cabbage, kohlrabi, Chinese cabbage, turnip, endive, chicory, water melon, melon, cucumber, gherkin, marrow, parsley, fennel, pea, beans, radish, black salsify, eggplant, sweet corn, pop corn, carrot, onion, tomato, pepper, lettuce, snap bean, cucurbit, shallot, broccoli, *Brassica,* and Brussels sprout.

Preferably, the plant seed is capable of germinating. Optionally, the seed may be deprived of husk (so-called husked seed or de-hulled seed). The seed may be primed or not primed (having been subjected to a treatment to improve the germination rate, *e.g.* osmopriming, hydropriming, matrix priming).

In an embodiment, the seed is not yet provided with artificial layers prior to carrying out the method of the invention, for example layers comprising a binder, such as a polymer. Accordingly, the seed coating composition is preferably applied directly on the natural outer surface of the seed. Nonetheless, it is possible that the seed surface has undergone a surface treatment prior to applying the seed coating composition. It is possible that such surface treatment does not entail the provision of an artificial layer, but involves a physical change or modification of the surface of part of the seed or the entire surface of the seed. For example, the surface treatment may involve increasing the surface roughness of the seed, such as by selective removal of parts of the seed coat, selective deformation of the seed coat, or a combination thereof. Typically, the treatment may involve introducing micro roughness on the seed surface. It is also possible that the seed surface is subjected to a surface treatment that does involve the provision of an artificial layer, such as the application of a primer coating layer on the seed surface. Other suitable surface treatments include, *e.g*., plasma surface treatment, contacting the seed with an abrasive material, exposure to hot and humid air, flame treatment, laser treatment, and electron beam surface treatment.

The method of the invention comprises applying a seed coating composition to seed. Preferably, the coating composition is applied as a liquid composition and/or latex composition and thereafter solidified (including cured and/or dried) to form a seed coating. The term "liquid coating composition" as used in this application is meant to include coating compositions in the form of a suspension, solution, emulsion, or dispersion.

Conventional means of coating may be employed for coating the seeds. Various coating machines are available to the person skilled in the art. Some well-known techniques include the use of drum coaters, fluidised bed techniques, rotary coaters (with and without integrated drying), and spouted beds. Suitably, the seed coating composition is applied to the seed by a rotary coater, a rotary dry coater, a pan coater or a continuous treater.

Typically, the amount of seed coating composition applied to the seed is in the range of 0.5-50 g per kg seed, such as 1-40 g per kg see, 2-35 g per kg seed, or 3-30 g per kg seed.

The seed coating composition can, for instance, be applied by film coating, spraying, dipping, or brushing of the seed coating composition. Optionally, it is applied at a temperature of -25 °C to 50 °C, for instance -5 °C to 35 °C, more often 15 °C to 30 °C, for instance at room temperature, such as 18 °C to 25 °C. Preferably, the seed coating composition is applied to the seed by film coating. The film coating may suitably be applied by spraying the liquid coating composition onto the seed, typically while the seeds fall or flow through a coating apparatus. Preferably, the method comprises film coating of the seed to apply the seed coating composition in the form of a film coating composition. It is advantageous is accordance with the present invention to apply the seed coating composition to the seed in a period ranging from 1-180 seconds, preferably 5-60 seconds, more preferably 10-30 seconds. When the seed coating composition is applied considerably slower, then this results in a seed coating which can be badly distributed over the individual seeds. The applied seed coating will then also suffer more from abrasion, and the coating machine is more quickly contaminated. Moreover, if the seed coating composition is applied slow, then the subsequent powder may insufficiently adhere, which is undesirable.

The method typically involves forming on the surface of the seeds a firmly adhering, moisture-permeable coating. The process typically comprises applying a liquid seed coating composition to the seeds before planting.

The preferred seed coating composition comprises one or more binders. The binder typically comprises a polymer. Many suitable binders are known. The binder can, for example, be selected from the group consisting of polyvinyl acetates, polyvinyl acetate copolymers, polyvinyl alcohols, polyvinyl alcohol copolymers, polyurethane, celluloses (including ethylcelluloses, methylcelluloses, hydroxymethylcelluloses, hydroxypropylcelluloses, carboxymethylcelluloses, and hydroxymethylpropylcelluloses), polyvinylpyrrolidones, dextrins, maltodextrins, polysaccharides, fats, oils, proteins, gum arabics, shellacs, vinylidene chloride, vinylidene chloride copolymers, calcium lignosulphonates, polyacrylates, acrylic copolymers, starches, polyvinylacrylates, zeins, casein, gelatine, chitosan, pullulan, polyethylene oxide, polyethylene glycol, ethylene vinylacetate, acrylamide polymers, acrylamide copolymers, polyhydroxyethyl acrylate, methylacrylimide monomers, poly(*N*-vinylacetamide), sodium alginate, polychloroprene and syrups. Also waxes such as carnauba wax, paraffin wax, polyethylene wax, bees wax, and polypropylene wax can be used as a binder. These binders may be used alone or in combination of two or more. Preferred binders can be selected from the group consisting of polyvinyl acetates, polyvinyl alcohols, hydroxypropylmethylcellulose, polysaccharides (such as starch), proteins, polyethylene glycol, polyvinyl pyrrolidones, and polyacrylates.

The amount of binder in the seed coating composition is normally in the range of 0.1-100 g per kg of the seed, preferably 0.5-50 g per kg of the seed, more preferably 1-20 g per kg of the seed. Typically, the amount of the binder in the coating composition is 1 % or more by total weight of the coating composition, preferably 10 % or more. Typically, the amount of the binder in the coating composition is 80 % or less by total weight of the coating composition, preferably 60 % or less.

The preferred seed coating composition further comprises one or more active ingredients (including plant enhancing agents, in particular plant protective products (also referred to as PPPs). Suitable examples of active ingredients, in particular plant enhancing agents, are fungicidal agents, bactericidal agents, insecticidal agents, nematicidal agents, molluscicidal agents, acaricides or miticides, pesticides, and biocides. Further possible active ingredients include disinfectants, micro-organisms, rodent killers, weed killers (herbicides), attracting agents, (bird) repellent agents, plant growth regulators (such as gibberellic acid, auxin or cytokinin), nutrients (such a potassium nitrate, magnesium sulphate, iron chelate), plant hormones, minerals, plant extracts, germination stimulants, pheromones, biological preparations, *etc.*

The amount of active ingredient applied, of course, strongly depends on the type of active ingredient and the type of seed used. Usually, however, the amount of one or more active ingredients is in the range of 0.001-200 g per kg of the seed. The skilled person is able to determine suitable amounts of active ingredient depending on the active ingredient and the type of seed used.

Typical fungicidal agents include Captan (*N*-trichloromethyl)thio-4-cyclohexane-1,2-dicarboximide), Thiram tetramethylthioperoxydicarbonic diamide (commercially available as Proseed™), Metalaxyl (methyl-*N*-(2,6-dimethylphenyl)-*N*-(methoxyacetyl)-D,L-alaninate), Fludioxonil (4-(2,2-difluoro-1,3-benzodioxol-4-yl)-1-*H*-pyrrol-3-carbonitril; commercially available in a blend with mefonoxam as Maxim™ XL), difenoconazole (commercially available as Dividend™ 3FS), carbendazim iprodione (commercially available as Rovral™), ipconazole, mefonoxam (commercially available as Apron™ XL), tebuconazole, carboxin, thiabendazole, azoxystrobin, prochloraz, and Oxadixyl (*N*-(2,6-dimethylphenyl)-2-methoxy-*N*-(2-oxo-3-oxazolidinyl) acetamide). A fungicide can be included in the seed coating composition in an amount of 0.0001-10 % by total weight of the coated seeds. Without wishing to be bound by any theory, the inventors found that the following fungicides can contribute to inducing stickiness when included in a seed coating composition: prothioconazole (commercially available as Redigo from Bayer), sedaxane (commercially available as Vibrance from Syngenta), metalaxyl, cymoxanil, fludioxonil (a mixture of metalaxyl, cymoxanil and fludioxonil is commercially available as Wakil from Syngenta) and ipconazole (commercially available as Rancona from Agriphar). Hence, the component that provides tackiness can suitably comprise one or more selected from the group consisting of prothioconazole, sedaxane, metalaxyl, cymoxyanil, fludioxonil, and ipconazole.

Typical bactericidal agents include streptomycin, penicillins, tetracyclines, ampicillin, and oxolinic acid.

Typical insecticidal agents include pyrethroids, organophosphates, caramoyloximes, pyrazoles, amidines, halogenated hydrocarbons, neonicotinoids, and carbamates and derivatives thereof. Particularly suitable classes of insecticides include organophosphates, phenylpyrazoles and pyrethoids. Preferred insecticides are those known as terbufos, chlorpyrifos, fipronil, chlorethoxyfos, tefluthrin, carbofuran, imidacloprid, and tebupirimfos. Commercially available insecticides include imidacloprid (commercially available as Gaucho™), and clothianidin (commercially available from Bayer as Poncho™), thiametoxam (commercially available from Syngenta as Cruiser™) Cypermetrin (commercially available from Agriphar as Langis^{®)}, and fipronil (commercially available from BASF as Regent™). Without wishing to be bound by any theory, the inventors found that the following insecticides can contribute to inducing stickiness when included in a seed coating composition: thiacloprid (commercially available as Sonido from Bayer) and methiocarb (commercially available as Mesurol from Bayer). Hence, the component that provides tackiness can suitably comprise one or more selected from the group consisting of thiacloprid and methiocarb.

Commercially available nematicidal agents include abamectin (commercially available from Syngenta as Avicta^{™}) thiodicarb (commercially available from Bayer as Aeris™).

Typical molluscicidal agents include metaldehyde (commercially available from Lonza as Meta^{®}) or niclosamid (commercially available from Bayer as Bayluscide^{®}), Cyazypir and Rynaxypir (available from DuPont).

Tackiness may also be induced by specific plant protective product formulations used rather than by single active ingredient components, or by specific components in a plant protective formulation that is used. The exact composition of such plant protective product formulations are sometimes proprietary information of the suppliers.

These lists are not exhaustive, new active ingredients are continuously developed and can be incorporated in the seed coating composition. Coating formulations are often packaged, stored and/or transported and only thereafter combined with formulations of such plant enhancing agents.

The seed coating composition can comprise further components such as one or more selected from a wetting and dispersing additive (sometimes also referred to as pigment dispersant), a filler, a solvent, a thickener, a colorant, an anti-foaming agent, a preservative, a surfactant, a slip additive and an effect pigment.

Coating formulations are typically prepared by mixing one or more of the components with a suitable binder, packaging, storing and/or transporting and are only thereafter combined with formulations of plant enhancing agents.

A wetting and dispersing agent can aid in mixing inorganic particles in the seed coating composition. Suitable wetting and dispersing additives include ionic and non-ionic products and include solutions of organo-modified polyacrylates, polyacrylates, sodium polyacrylate, polyurethane, phosphoric acid ester, star polymers, and/or modified polyethers. The wetting and dispersing additive can for instance be present in some embodiments of the seed coating composition of the invention in an amount of 0-40 % by total weight of the inorganic particles, such as 0.10-10 %.

Suitable thickeners include agar, carboxy methylcellulose, carrageen, chitin, fucoidan, ghatti, gum arabic, karaya, laminaran, locust bean gum, pectin, alginate, guar gum, xanthan gum, diutan gum, and tragacanth, bentonite clays, HEUR (hydrophobically modified, ethoxylated urethane) thickeners, HASE (hydrophobically modified, alkali-swellable emulsion) thickeners and polyacrylates. Gums are generally preferred because of their low cost, availability and superior ability to enhance the physical characteristics of the resultant film.

Examples of colourants include dyes or pigmented pigment dispersions. Examples of suitable dyes include: anthraquinone, triphenylmethane, phthalocyanine and derivatives thereof, and diazonium salts. Pigment dispersions can contain pigments such as pigment red 112 (CAS No. 6535-46-2), pigment red 2 (CAS No. 6041-94-7), pigment red 48:2 (CAS No. 7023-61-2), pigment blue 15:3 (CAS No. 147-14-8), pigment green 36 (CAS No. 14302-13-7), pigment green 7 (CAS No. 1328-53-6), pigment yellow 74 (CAS No. 6358-31-2), pigment orange 5 (CAS No. 3468-63-1), pigment violet 23 (CAS No. 6358-30-1), pigment black 7 (CAS No. 97793-37-8), and pigment white 6 (CAS No. 98084-96-9). The colourant may be present in the seed coating composition in an amount of 0-50 % by total weight of the seed coating composition, such as 1-10 %.

Examples of suitable antifoaming agents include polyethylene glycol, glycerine, mineral oil defoamers, silicone defoamers, and non silicone defoamers (such as polyethers, polyacrylates), dimethylpolysiloxanes (silicone oils), arylalkyd modified polysiloxanes, polyether siloxane copolymer containing fumed silica. The antifoaming agent may be present in some embodiments of the seed coating composition in an amount of at least 1 ppm by weight, or 0.1-0.3 % by total weight of the seed coating composition.

Examples of suitable effect pigments include pearlescent pigment in different particle sizes. Effect pigments having a particle size of 15 µm or less, or a particle size of 60 µm or less are commonly used. The particle size of the effect pigments is normally not more than 200 µm, preferably not more than 100 µm. Usually, the particle size of the effect pigment is 1 µm or more. Another effect pigment can be aluminium. All effect pigments are commonly used to create a nice cosmetic look on the seeds.

A biocide can be included in some embodiments of the seed coating composition for instance as preservative, in order to prolong the shelf life of the seed coating composition before being applied to a seed, such as when being stored. Examples of suitable biocides include MIT (2-methyl-4-isothiazolin-3-one; CAS No. 2682-20-4) and BIT (1,2-benzisothiazolin-3-one; CAS No. 2632-33-5).

In an embodiment the seed coating composition further comprises flakes of a translucent polymeric film on an inert carrier (a carrier which has no detectable, harmful consequences for the environment, in particular for the seed or the outgrowing plant in the quantities present) for providing the seeds with a light-reflecting appearance, such as described in WO-A-03/003812. Preferably, the translucent polymeric film comprises light-reflecting particles.

The seed coating composition further often comprises one or more solvents. Solvents may be selected from the group consisting of water, alcohols, and hydrocarbons. Also mixtures of solvents can be used. It is preferred that the solvent is liquid at 20 °C and 1 atm. Examples of suitable solvents include glycols and their esters and ethers, in particular ethylene and propylene glycols and their esters and ethers, for instance, esters and ethers with C₁-C₆ alkyl groups and/or aromatic groups, such as methyl, ethyl, propyl, butyl, benzyl and phenyl ethers, including mono ethers and dialkyl ethers, and esters of these ethers, such as acetates, and ethylene and propylene glycol esters, for instance of fatty acids; polyethylene glycol (PEG) and polypropylene glycol and esters thereof, especially with fatty acids; butyl cellosolve, butyl carbitol, polyethylene glycol; *N*-methylpyrrolidone, glycerine, alkyl alcohols with up to 10 carbon atoms, such as ethanol, propanol and butanol. Other examples of solvents include dipropylene glycol methyl ether and propylene glycol methyl ether. An important solvent is ethylene glycol. Further examples include propylene tetramer and synthetic ester oils such as lactate esters, particularly ethyl lactate and benzoate esters *e.g. iso*-propyl or 2-ethylhexyl benzoates. Aromatic hydrocarbons such as xylene, aliphatic and paraffinic solvents and vegetable oils can also be used as solvent. Aromatic solvents are less preferred.

The seed coating composition may also comprise components with a plasticising effect, such as surfactants or antifreeze agents. Common surfactants include amphiphilic organic compounds, usually comprising a branched, linear or aromatic hydrocarbon, fluorocarbon or siloxane chain as tail and a hydrophilic group. Some types of surfactants include non-ionic, anionic, cationic and amphoteric surfactants, and organosilicone and organofluorine surfactants. Some examples of surfactants include polyoxyethylene glycol and polyoxypropylene ethers and esters, in particular alkyl, aryl and alkylaryl ethers thereof, and sulphates, phosphates and sulphonic acid compounds of such ethers, glucoside (alkyl) ethers, glycerol esters, such as alkyl and fatty acid esters, sorbitan (alkyl) esters, acetylene compounds, cocamide compounds, block copolymers of polyethylene glycol and propylene glycol. Further examples of surfactants include alkylamine salts and alkyl quaternary ammonium salts, for example betain type surfactants, amino acid type surfactants; and polyhedric alcohols, fatty acid esters, in particular C₁₂-C₁₈ fatty acids, for instance of polyglycerin, pentaerythritol, sorbitol, sorbitan, and sucrose, polyhydric alcohol alkyl ethers, fatty acid alkanol amides, and propoxylated and ethoxylated compounds such as fatty alcohol ethoxylates, polyethyxlated tallow amine and alkylphenol ethoxylates. Some examples of anionic surfactants include carboxylic acids, copolymers of carboxylic acids, sulphates, sulphonic acid compounds and phosphates, for example lignin sulphonates and (linear) alkylaryl sulphonates.

Anti-freeze agents include for example: ethylene glycol, propylene glycol, 1,3-butylene glycol, hexylene glycol, diethylene glycol, and glycerin, with the preferred glycol being ethylene glycol and propylene glycol.

The seed coating composition comprises 0.5-50 % by total weight of the coating composition of a component that provides tackiness such that the resulting coated seed is more tacky than a coated seed obtained with the same coating composition lacking the component that provides tackiness. Preferably, the amount of the component that provides tackiness is 1-40 % by total weight of the coating composition, such as 2-35 %, or 3-30 %.

The components that provide tackiness may be a single component, but may also be more than one components. Any one of the components in the seed coating composition as mentioned above may provide tackiness. For example, it is possible that one or more of the active ingredients in the seed coating composition lead to the resulting seed coating being more tacky than a seed coating obtained from the same coating composition lacking this specific active ingredient. Another possibility is that one or more of the solvents in the seed coating composition leads to the resulting seed coating being more tacky than a seed coating obtained from the same coating composition lacking this specific solvent. It is also possible that one or more of the additives in the seed coating composition lead to the resulting seed coating being more tacky than a seed coating obtained from the same coating composition lacking this specific additive. Combinations of the above are also possible. The component providing tackiness very much depends on the type of seed coating composition that is applied. The person skilled in the art, however, is capable of determining which of the components in the seed coating composition is responsible for providing tackiness.

The component providing tackiness may for instance comprise one or more selected from the group consisting of a solvent, such as water, an alcohol, a hydrocarbon; an active ingredient, such as a fungicidal agent, a bactericidal agent, an insecticidal agent, a nematicidal agent, a molluscicidal agent, an acaricide, a miticide, a pesticide, a biocide, a disinfectant, a micro-organism, a rodent killer, a herbicide, an attracting agent, a repellent agent, a plant growth regulator, a plant hormone, a plant extract, a germination stimulant, a pheromone; a nutrient; a flow agent; a wetting agent; a spreading agent; a binder; and an oil.

According to the method of the invention, a powder formulation is applied to the coated seed, directly after having applied the seed coating composition to the seed. It is important that the powder formulation is applied directly after the seed coating composition. If the time window between applying the seed coating composition and applying the powder formulation is too large, then the tackiness properties of the singular seeds will on the one hand have the disadvantageous effect that seeds agglomerate into larger clumps which can then no longer separate into separate individual seeds (or only very difficultly), and on the other hand it will have the disadvantageous effect that individual seeds will stick to the surface of the respective apparatus wherein the seeds are located. However, it is also disadvantageous to include the powder formulation in the seed coating composition as this will not lead to the desired coating. This may lead to a coated seed with increased levels of abrasion and dust-off. In fact, if the seed coating composition comprises a too high wax content, it was found that the resulting coated seed can be more tacky.

Accordingly, it was surprisingly found that the tackiness problems of coated seed can suitably be overcome by contacting said coated seed with a powder formulation as described herein, directly after having applied the coating composition. The expression "directly after" as used in this application can for instance be interpreted such that the period between having applied all seed coating composition to the seed and contacting the tacky coated seed with the powder formulation is 30 seconds or less, 20 seconds or less, more preferably 10 seconds or less, and even more preferably 5 seconds or less. Usually, practical details require that the period between having applied all seed coating composition to the seed and contacting the tacky coated seed with the powder formulation is at least 0.1, such as at least 0.5 seconds, or at least 1 second.

The amount of the powder formulation that is used for contacting with the tacky coated seed can suitably be in the range of 0.5-6 % by total weight of dry uncoated seed, preferably 1-5 %, such as 2-4 %. With respect to the weight of the seed coating, the amount of powder formulation that is used for contacting with the tacky coated seed can suitably be in the range of 0.5-20 % by total weight of the seed coating, preferably 1-15 %, such as 2-10 %. If the amount of powder formulation is lower than 0.5 % by total weight of dry uncoated seed and/or lower than 0.5 % by total weight of the seed coating, then the treated seeds may still have some degree of the tackiness (although less than before treatment). If the amount of powder formulation is higher than 6 % by total weight of dry uncoated seed and/or higher than 20 % by total weight of the seed coating, then the powder does not effectively adhere to the coated seed which results in undesirably high dust levels.

In a preferred embodiment, the seed coating composition and the powder formulation are successively applied to the seed in a drum coater, rotary coater, rotary dry coater, pan coater, or a continuous treater. This advantageously allows to conduct both treatment steps in the same container, without transporting the seeds in between.

The powder formulation is typically given to the coated seed in a period ranging from 0.1-10 seconds, preferably 0.5-7 seconds, more preferably 1-5 seconds, even more preferably 2-3 seconds. If the powder formulation is given to the coated seed slower, then the time profit gained by reducing tackiness is compromised by the time required for adding the powder formulation. Furthermore, slow addition of the powder formulation may result in machine contamination. Also, seeds may loose some tackiness (*e.g*. due to abrasion), after which the powder may no longer adhere well to the seed.

The powder formulation that is used in the method of the invention comprises a wax. The wax can suitably be selected from the group consisting of natural wax, mineral wax and synthetic wax. Some suitable examples of waxes include polyethylene wax, carnauba wax, paraffin wax, polypropylene wax, oxidised polyethylene wax, montan wax (*e.g*. Lumax^{®} obtainable from Bayer), ceresin wax, ozocerite, peat wax, Fischer-Tropsch wax, amide wax, ethylene-acrylic acid wax, polyolefin wax, ethylene *bis* stearamide wax, bees wax, lanolin wax, and vegetable wax. The amount of wax in the powder formulation can be 1-100 % by total weight of the powder formulation, such as 5-100 %, 10-100 %, 30-99.5 %, 50-99 % or 75-98 %. In an embodiment, the powder formulation used for the method of the invention essentially consists of wax. This means that only trace amounts of other components will be present in the powder formulation so that *e.g.* 99 % or more of the powder formulation is wax, preferably 99.5 % or more, even more preferably 99.9 % or more.

Apart from the wax, the powder formulation may optionally comprise further components, such as one or more selected from the group consisting of talc, mica, kaolin, calcium carbonate, silica, silicates, barium sulphate, and calcium sulphate. These additional components may be present in the powder formulation in amounts of 0-99 % by total weight of the powder formulation, such as 0-90 %, 0.5-70 %, 1-50 %, or 2-25 %. For instance, the powder formulation can comprise comprising a combination of a wax with talc.

The powder formulation is in particulate form. In a preferred embodiment, the powder formulation has an average particle size as determined by laser diffraction particle size analysis of 2-200 µm, preferably in the range of 3-150 µm, such as in the range of 4-100 µm, or in the range of 5-50 µm. If the average particle size of the powder formulation is smaller than 2 µm, then the process can become dusty which is undesirable. This means that during addition of the powder formulation a considerable amount of dust is formed. Another disadvantage of too small particle size for the powder formulation is that it may have an effect on the colour of the coated seed. Since such seed coatings often deliberately provide the coated seeds with a specific colour, it is undesirable if the colour thereafter is altered by a further treatment with powder formulation. If the average particle size of the powder formulation is larger than 200 µm, then the reduction in tackiness and, as a result, reduction in time for subsequent process steps is small. The particles of the powder formulation will then not (or insufficiently) adhere to the coated seeds and therefore may insufficiently reduce stickiness for subsequent process steps.

Preferably, the coated seed is contacted with the powder formulation for a period ranging from 1-30 seconds, such as for a period ranging from 2-25 seconds, or a period ranging from 3-20 seconds. If the coated seed is contacted with the powder formulation for shorter period of time, then this can lead to a bad coverage. Contacting too long will typically result in more abrasion and more dust.

After having contacted the coated seed with the powder formulation, the coated seeds can optionally be separated from powder formulation that has not adhered to the coated seeds. Such separation may involve using a sieve and/or removal by suction. However, it is preferred to use a minimal amount of powder such that later separation steps are unnecessary.

Optionally, the treated seed can be dried after the method of the invention. During drying liquid may be evaporated, small molecules may be polymerized, and/or particles may seep out. Drying may, for example, be carried out using a conventional drying apparatus.

The resulting seed may further be subjected to one or more subsequent treatment steps of packaging, storing (in silos), pouring seeds (from silos) into bags for example for transport (seeds treated according to the invention do not clump together in the bags), emptying bags loaded with seeds, and sowing. The method accordingly allows a quick and cost effective processing and/or handling of coated seed.

In a further aspect, the invention is directed to coated seed obtainable by the method of the invention. Without wishing to be bound by any theory, it is believed that contacting the powder formulation with the tacky coated seed results in most of the powder formulation adhering to the tacky coated seed, thereby reducing the degree of tackiness. Advantageously, the specific powder formulation, and the specific process conditions used in the method of the invention, ensure that the components providing tackiness remain (or at least substantially remain) on the coated seed. The specific powder formulation and the specific process conditions used in the method of the invention avoid (or at least essentially avoid) that important components providing tackiness (such as active ingredients) stick to the powder formulation and leave a coated seed that no longer has the desirable properties which it had before. Accordingly, the method of the invention results in a coated seed that still has the desirable properties that were provided by the seed coating, but does not have undesirable tackiness properties. Such a coated seed cannot be obtained by the conventional seed coating techniques. The coated seed has unique properties. Typically, the coated seed obtainable by the method of the invention has a seed coating, and powder formulation as defined herein adhered to the outer surface of the seed coating.

In yet a further aspect, the invention is directed to the use of a wax in a powder formulation as an agent for reducing tackiness of coated seed. Preferably, the wax is a wax as described herein. Further, the powder formulation is preferably a powder formulation as described herein. The powder formulation is to be contacted with coated seed so as to reduce the tackiness thereof.

The invention has been described by reference to various embodiments, compositions and methods. The skilled person understands that features of various embodiments, compositions and methods can be combined with each other. For instance, preferred coating compositions can be used in the various methods, in the same way preferred steps of a method can be combined with each other and with preferred coating compositions.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e*., meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (*e.g*., "such as") provided herein, is intended merely to better illuminate the invention and does not pose a limitation on the scope of the invention unless otherwise claimed. No language in the specification should be construed as indicating any non-claimed element as essential to the practice of the invention. For the purpose of the description and of the appended claims, except where otherwise indicated, all numbers expressing amounts, quantities, percentages, and so forth, are to be understood as being modified in all instances by the term "about". Also, all ranges include any combination of the maximum and minimum points disclosed and include and intermediate ranges therein, which may or may not be specifically enumerated herein.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

The invention will now be further illustrated by the following non-limiting examples.

### Examples

### Example 1

Corn was coated with a seed coating composition. Film coat formulation DISCO™ AG Red L-350 is commercially available from INCOTEC. It is a water-based, red film coat liquid typically used for corn seed.

The seed coating compositions were mixed with Royal Flo (fungicide active ingredient obtainable from Chemical Agrosava), Maxim XL (fungicide active ingredient obtainable from Syngenta) and Sonido (pesticide active ingredient obtainable from Bayer CropScience). 1.0 or 2.0 ml per kg corn seed of the DISCO™ formulation was mixed with 3.35 ml per kg corn seed of Royal Flo, 0.75 ml per kg corn seed of Maxim XL, and 8.5 ml per kg of corn seed of Sonido. The resulting mixture was used as a seed coating composition for application on corn seed. Immediately after application of the seed coating composition (*i.e*. within 2-3 seconds), the coated seed was contacted with a powder formulation as shown in table 1. The wax indicated in table 1 is atomised ACRAWAX™ C obtainable from Lonza (*N*,*N*'-ethylene *bis*(stearamide)) with an average particle size of 10 µm. The component providing tackiness in this example is the pesitice active ingredient Sonido.

**Table 1**

| Sample | DISCO L-350 [ml/kg] | Powder formulation | Contacting time [s] | Resulting coated seed |
|---|---|---|---|---|
| 1 | 1.0 | none | 12-14 | tacky |
| 2 | 1.0 | effect pigment ¹⁾ | 10-12 | moderately tacky |
| 3 | 1.0 | wax | 8-10 | not tacky |
| 4 | 1.0 | mix A ²⁾ | 10-12 | tacky |
| 5 | 1.0 | mix B ³⁾ | 10-12 | slightly tacky |
| 6 | 2.0 | none | 12 | tacky |
| 7 | 2.0 | effect pigment ¹⁾ | 10-12 | moderately tacky |
| 8 | 2.0 | wax | 8-10 | not tacky |
| 9 | 2.0 | mix A ²⁾ | 10 | moderately tacky |
| 10 | 2.0 | mix B ³⁾ | 10-12 | slightly tacky |

| | | | | |
|---|---|---|---|---|
| ¹⁾ QolorTech Pearl QT-111 effect pigment having an average particle size of less than 15 µm ²⁾ 90 % by weight of Talcum Haichen (talc) mixed with 10 % by weight of QolorTech Pearl QT-111 effect pigment having an average particle size of less than 15 µm ³⁾ 90 % by weight of Talcum Haichen (talc) mixed with 10 % by weight of Ceridust 3715 (polar modified polyethylene wax) with an average particle size of 7.5-9.5 µm. | | | | |

### Example 2

Linseed was coated with a seed coating composition. Film coat formulations DISCO™ AG Red L-551 and DISCO™ AG Red L-802 are commercially available from INCOTEC. Both these film coat formulations are water-based, red film coat liquids. DISCO™ AG Red L-551 is typically used for coating cereal seed. DISCO™ AG Red L-802 is typically used for coating linseed and pea seed.

The seed coating compositions were mixed with YaraVita Teprosyn Zn (nutrient ingredient obtainable from Yara), Prelude 20FS (fungicide active ingredient obtainable from BASF), Celest (fungicide active ingredient obtainable from Syngenta), Apron XL (fungicide active ingredient obtainable from Syngenta), and water as a solvent, as detailed in table 2 below. The resulting mixture was used as a seed coating composition for application on linseed. Immediately after application of the seed coating composition (*i.e*. within 2-3 seconds), the coated seed was contacted with a powder formulation as shown in table 3. The component providing tackiness in this example is the fungicide active ingredient Prelude 20FS.

**Table 2**

| Coating | L-551 [ml/kg] | L-802 [ml/kg] | Teprosyn [ml/kg] | Prelude [ml/kg] | Celest [ml/kg] | Apron [ml/kg] | Water [ml/kg] |
|---|---|---|---|---|---|---|---|
| A | 2.5 | 1.0 | 6.0 | 1.0 | | | 1.0 |
| B | 3.0 | | 6.0 | 1.0 | | | 1.0 |
| C | 2.5 | 1.0 | 6.0 | | | 0.4 | 1.0 |
| D | 3.0 | | 6.0 | | | 0.4 | 1.0 |
| E | 2.5 | 1.0 | 6.0 | | 1.3 | 0.4 | 1.0 |
| F | 3.0 | | 6.0 | | 1.3 | 0.4 | 1.0 |

**Table 3**

| Sample | Coating | Powder formulation | Contacting time [s] | Resulting coated seed |
|---|---|---|---|---|
| 11 | A | none | 12 | non uniform, pink |
| 12 | B | none | 14 | non uniform, sticky |
| 13 | B | effect pigment ¹⁾ | 8 | shiny pink |
| 14 | B | wax A ²⁾ | 3 | non uniform, not tacky, moderately dusty |
| 15 | B | wax B ³⁾ | 3 | non uniform, not tacky, not dusty |
| 16 | B | mix A ⁴⁾ | 4 | moderately uniform, not dusty, pink |
| 17 | B | mix B ⁵⁾ | 4 | moderately uniform, not dusty, red |
| 18 | C | none | 12 | moderately uniform, |
| 18 | C | none | 12 | moderately uniform, |
| 19 | D | none | 14 | tacky |
| 20 | D | effect pigment ¹⁾ | 8 | shiny pink |
| 21 | D | wax A ²⁾ | 3 | non uniform, not tacky, moderately dusty |
| 22 | D | wax B ³⁾ | 3 | moderately uniform, not tacky, not dusty |
| 23 | D | mix A ⁴⁾ | 4 | uniform, not dusty, pink |
| 24 | D | mix B ⁵⁾ | 4 | uniform, not dusty, red |
| 25 | E | none | 12 | uniform, tacky |
| 26 | F | none | 14 | tacky, red |
| 27 | F | effect pigment ¹⁾ | 8 | shiny pink |
| 28 | F | wax A ²⁾ | 3 | uniform, not tacky, not dusty |
| 29 | F | wax B ³⁾ | 3 | uniform, not tacky, not dusty |
| 30 | F | mix A ⁴⁾ | 4 | uniform, not dusty, pink |
| 31 | F | mix B ⁵⁾ | 4 | uniform, not dusty, red |

| | | | | |
|---|---|---|---|---|
| ¹⁾ QolorTech Pearl QT-111 effect pigment having an average particle size of less than 15 µm ²⁾ atomised ACRAWAX™ C obtainable from Lonza (*N*,*N*'-ethylene *bis*(stearamide)) with an average particle size of 10 µm ³⁾ powdered ACRAWAX™ C obtainable from Lonza (*N*,*N*'-ethylene *bis*(stearamide)) with an average particle size of 130 µm ⁴⁾ 90 % by weight of Talcum Haichen (talc) mixed with 10 % by weight of QolorTech Pearl QT-111 effect pigment having an average particle size of less than 15 µm ⁵⁾ 90 % by weight of Talcum Haichen (talc) mixed with 10 % by weight of Ceridust 3715 (polar modified polyethylene wax) with an average particle size of 7.5-9.5 µm. | | | | |

## Claims

1. Method for preparing coated seed, said method comprising
- applying a seed coating composition to seed; and,
- directly thereafter contacting said coated seed with a powder formulation, wherein said powder formulation comprises a wax,
wherein said coating composition comprises 0.5-50 % by weight of the coating composition of a component that provides tackiness such that the resulting coated seed is more tacky than a coated seed obtained with the same coating composition lacking the component that provides tackiness.

2. Method according to claim 1, wherein the period between having applied all seed coating composition to the seed and contacting the coated seed with the powder formulation is 30 seconds or less, 20 seconds or less, more preferably 10 seconds or less, and even more preferably 5 seconds or less.

3. Method according to claim 1 or 2, wherein the amount of seed coating composition applied to said seed is in the range of 0.5-50 g/kg seed, such as 1-40 g/kg, 2-35 g/kg, or 3-30 g/kg.

4. Method according to any one of claims 1-3, wherein said component providing tackiness comprises one or more selected from the group consisting of a solvent, such as water, an alcohol, a hydrocarbon; an active ingredient, such as a fungicidal agent, a bactericidal agent, an insecticidal agent, a nematicidal agent, a molluscicidal agent, an acaricide, a miticide, a pesticide, a biocide, a disinfectant, a micro-organism, a rodent killer, a herbicide, an attracting agent, a repellent agent, a plant growth regulator, a plant hormone, a plant extract, a germination stimulant, a pheromone; a nutrient; a flow agent; a wetting agent; a spreading agent; a binder; and an oil.

5. Method according to any one of claims 1-4, wherein the seed coating composition comprises a plant protecting agent in an amount of 27-80 % by total weight of the seed coating composition, preferably 30-70 %, more preferably 32-65 %.

6. Method according to any one of claims 1-5, wherein said seed coating composition is applied to said seed in a period ranging from 1-180 seconds, preferably 5-60 seconds, more preferably 10-30 seconds.

7. Method according to any one of claims 1-6, wherein the amount of said powder formulation applied to said coated seed is
- in the range of 0.5-6 % by total weight of dry uncoated seed, preferably 1-5 %, such as 2-4 %; and/or
- in the range of 0.5-20 % by total weight of the coating, preferably 1-15 %, such as 2-10 %.

8. Method according to any one of claims 1-7, wherein said powder formulation is given to said coated seed in a period ranging from 0.1-10 seconds, preferably 0.5-7 seconds, more preferably 1-5 seconds, even more preferably 2-3 seconds.

9. Method according to any one of claims 1-8, wherein said coated seed is contacted with said powder formulation for a period ranging from 1-30 seconds, such as for a period ranging from 2-25 seconds, or a period ranging from 3-20 seconds.

10. Method according to any one of claims 1-9, wherein the powder formulation comprises 1-100 % by total weight of the powder formulation of wax, such as 5-100 %, or 10-100 %.

11. Method according to any one of claims 1-10, wherein the wax is selected from the group consisting of natural wax, mineral wax and synthetic wax, preferably the wax is selected from the group consisting of polyethylene wax, carnauba wax, paraffin wax, polypropylene wax, oxidised polyethylene wax, montan wax, Fischer-Tropsch wax, amide wax, ethylene-acrylic acid wax, polyolefin wax, ethylene *bis* stearamide wax, bees wax, lanolin wax, and vegetable wax.

12. Method according to any one of claims 1-11, wherein the powder formulation further comprises one or more selected from the group consisting of talc, mica, kaolin, calcium carbonate, silica, silicate, barium sulphate, and calcium sulphate.

13. Method according to any one of claims 1-12, wherein the powder formulation has an average particle size as determined by laser diffraction particle size analysis of 2-200 µm, preferably in the range of 3-150 µm, such as in the range of 4-100 µm, or in the range of 5-50 µm.

14. Coated seed obtainable by the method according to any one of claims 1-13.

15. Use of a wax in a powder formulation as an agent for reducing tackiness of coated seed, preferably a wax as defined in claim 10 or 11.
